# DEMANDE DE BREVET EUROPEEN

(11) **EP 2 387 902 A1**
(43) Date de publication de la demande: **23.11.2011**
(21) Numéro de dépôt: 11356007.2
(22) Date de dépôt: 16.05.2011
(51) Int. Cl.: A44B 11/00, F16B 7/04

(54) **Elément et dispositif de maintien de parties de bande(s)**

(30) Priorité: 18.05.2010 FR 1002079; 14.06.2010 FR 1002494
(71) Demandeur: Houze, Matthieu, 69005 Lyon (FR)
(72) Inventeur: Houze, Matthieu, 69005 Lyon (FR)

(57) **Abrégé**

L'invention concerne un élément et dispositif permettant de maintenir croisées par friction au moins trois parties de bande(s) (D, E, F, G) en un endroit choisi sur celles-ci, selon deux axes dont l'angle entre ceux-ci est défini par la forme du corps rigide, en préservant un parallélisme entre les plans définis par les parties de bande(s) (D, E, F, G) à leur entrée sur le corps rigide et à leur sortie du corps rigide, en évitant tout percement ou pincement des parties de bande(s), ou tout système supplémentaire de fixation. L'élément est constitué d'un unique corps rigide, composé de deux séries de branches (51a-e,52a-e) reliées par des parties de raccordement (56a-h). Le dispositif comprend le corps rigide ainsi que des parties de bande(s) (D, E, F, G), chacune contribuant au maintien du système. Le dispositif est particulièrement destiné au domaine vestimentaire.

## Description

### Domaine de l'invention

L'élément de maintien est constitué d'un unique corps rigide permettant de maintenir croisées par friction plusieurs parties de bande(s) en un endroit choisi sur celles-ci, selon deux axes dont l'angle entre ceux-ci est défini par la forme du corps rigide, en préservant un parallélisme entre les plans définis par les parties de bande(s) à leur entrée sur l'élément de maintien et à leur sortie de l'élément de maintien. Le dispositif de maintien comprend l'élément de maintien ainsi que les parties de bande(s). La présente invention est particulièrement destinée au domaine vestimentaire.

### Contexte de l'invention

Les systèmes communément utilisés pour maintenir croisées plusieurs parties de bande(s) en un endroit choisi sur celles-ci, selon deux axes, en préservant un parallélisme entre les plans définis par les parties de bande(s) à leur entrée sur l'élément de maintien et à leur sortie de l'élément de maintien soit perforent les parties de bande(s), ou alors les pincent, ou encore nécessitent un système de fixation type scratch. D'autre part, un homme du métier penserait à créer un corps englobant les parties de bande(s) à leur croisement. Par ailleurs, un simple anneau est parfois utilisé afin de maintenir croisées des parties de bande(s) sans les percer, ni les pincer, ni nécessiter de système supplémentaire de fixation.

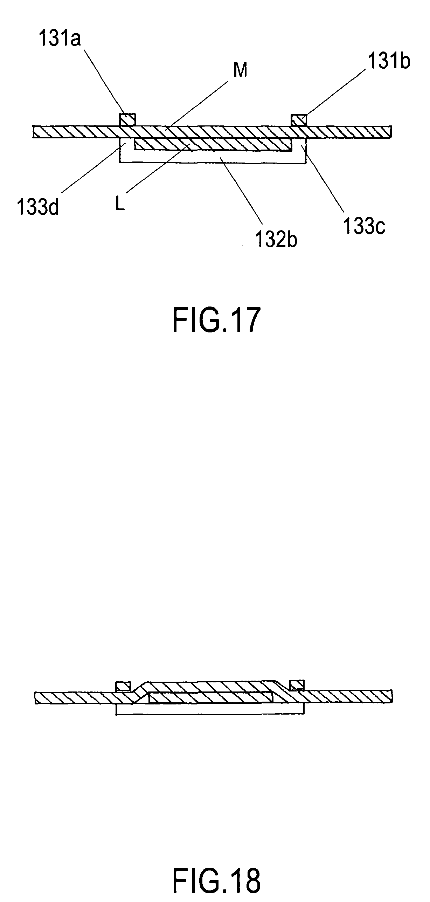

Le document US2835010 décrit un dispositif de maintien de parties de bande(s) pour des bandes flexibles, ces parties de bande(s) étant maintenues croisées. Ce document décrit et illustre au moins un élément de maintien présentant deux branches dans un premier plan et deux branches dans un deuxième plan, dont la projection forme un losange, le carré étant un cas particulier de losange, ces branches étant reliées par des éléments de jonction. Des parties de bande(s) flexibles sont passées entre les branches afin d'être maintenues. Tel que décrit et illustré, le maintien de ces parties de bande(s) flexibles repose sur un écartement entre les branches du premier plan et celles du deuxième plan qui est inférieur à l'épaisseur cumulée des parties de bande(s), de sorte qu'au moins une des bandes passant dans l'élément sera déformée (fig.18), cette déformation permettant le maintien du dispositif. La bande effectue en effet un parcours présentant plusieurs changements de direction en passant sous une première branche, puis au dessus de l'autre bande qu'elle croise et enfin sous une deuxième branche. La bande est ainsi pincée à deux reprises grâce à l'écartement réduit entre les branches. Afin de permettre la déformation d'une partie de bande, la partie de bande qui la croise présente une largeur légèrement inférieure à l'écartement entre les branches. Etant donné l'écartement réduit entre les branches du premier plan et celles du deuxième plan, le parallélisme entre les extrémités des parties de bande(s), à leur entrée sur l'élément de maintien et à leur sortie de l'élément de maintien, est assuré par des efforts de traction au niveau de ces extrémités. Ces efforts de traction tendent à repositionner les parties de bande(s) selon un seul plan ; l'écart réduit entre les branches amène ainsi chaque partie de bande à déformer l'autre partie de bande, assurant le maintien de ces parties de bande(s).

### Résumé de l'invention

L'élément et le dispositif selon l'invention évite tout percement ou pincement des parties de bande(s), ou tout système supplémentaire de fixation type scratch. Il se rapproche d'un système venant englober les parties de bande(s) à leur croisement pour les maintenir ; mais dans l'élément selon l'invention, le corps rigide ne vient entourer qu'en partie les parties de bande(s) en faisant contribuer chacune des parties de bande(s) au système de maintien.

Le document US2835010 est le document de l'état de la technique le plus proche de l'élément et du dispositif selon l'invention.

Concernant le maintien d'au moins trois parties de bande(s), le document US2835010 ne décrit auncun élément de maintien comportant au moins trois branches dans un premier plan, au moins trois branches dans un second plan et au moins six parties de raccordement pour relier les branches du premier plan aux branches du second plan. De plus, un homme du métier ne peut nullement déduire ces caractéristiques d'après le document.

Concernant le maintien de deux parties de bande(s), l'élément de maintien du dispositif selon l'invention est également constitué d'un unique corps rigide, composé de deux premières branches, de deux secondes branches et de quatre parties de raccordement, reliant les extrémités des branches du premier plan aux extrémités des branches du second plan ; l'ensemble des segments qui relient les extrémités d'une même branche constituant, par projection, un quadrilatère. Mais le document US2835010 ne décrit aucun dispositif de maintien permettant de maintenir croisées deux parties de bande(s) selon deux plans parallèles, c'est-à-dire sans flexion ni déformation de ces parties de bande(s).

Le dispositif de maintien de deux parties de bande(s) selon l'invention repose non sur une déformation des parties de bande(s) mais sur une sensible rigidité de ces parties de bande(s). Cette sensible rigidité permet de garantir la friction nécessaire entre les parties de bande(s) se croisant ainsi que la friction nécessaire avec les quatre parties de raccordement et les deux branches le long desquelles passent ces parties de bande(s). Le dispositif de maintien du document US2835010 ayant une vocation fonctionnelle et étant basé sur une déformation des parties de bande(s), il incite explicitement l'homme du métier à réfléchir en termes de bandes flexibles. Il s'agit d'ailleurs explicitement d'un dispositif destiné au maintien de bandes flexibles pouvant subir aisément une déformation. Ce document US2835010 détourne donc dès le départ l'homme du métier de la solution revendiquée.

Contrairement au dispositif de maintien du document US2835010, dans le dispositif de maintien de deux parties de bande(s) selon l'invention l'épaisseur cumulée des deux parties de bande(s) se croisant est sensiblement égale à la longueur des parties de raccordement du corps rigide (fig.17). Chacune des deux parties de bande(s) traverse ainsi cet élément de maintien selon un seul plan ; ces deux plans sont sensiblement parallèles entre eux et sensiblement parallèles, d'une part, au plan défini par les extrémités des premières branches et, d'autre part, au plan défini par les extrémités des secondes branches. Le document US2835010 incite à pincer les recouvrements de bande afin de déformer au moins une de ces parties de bande(s). Le dispositif de maintien de ce document est basé sur cette distorsion de bande. Par conséquent, ce document incite explicitement l'homme du métier à limiter l'espace entre les branches pour assurer un meilleur maintien. Ce document détourne donc dès le départ l'homme du métier de la solution revendiquée.

A la différence du dispositif du document US2835010, dans le dispositif de maintien de deux parties de bande(s) selon l'invention, la largeur des deux parties de bande(s) est sensiblement égale à l'écartement entre les branches de manière à définir précisément l'angle selon lequel se croisent les parties de bande(s) et de manière à accroître la friction entre les parties de bande(s) et l'élément de maintien.

Le dispositif de maintien de deux parties de bande(s) selon l'invention permet de mettre en place ces deux parties de bande(s) dans l'élément de maintien sans déformation de celles-ci. Il suffit de poser la première bande à l'intérieur de l'élément de maintien puis de faire glisser la deuxième selon un seul et même plan, entre la bande précédemment mise en place et les deux branches parallèles à cette partie de bande. De même, afin d'ajuster le positionnement des parties de bande(s) dans l'élément de maintien il suffit de les faire coulisser. La mise en place des parties de bande(s) dans l'élément de maintien du dispositif selon l'invention ainsi que leur repositionnement est donc plus simple, plus rapide.

Dans le dispositif de maintien de deux parties de bande(s) selon l'invention, cette mise en place et ce repositionnement sans déformation des parties de bande(s) permet également de n'abîmer que très peu les parties de bande(s). Ces parties de bande(s) peuvent ainsi être réalisées en matériaux dont la surface est relativement fragile, comme le cuir. Le dispositif de maintien du document US2835010 est abordé de manière fonctionnelle, sans qu'il ne soit question de l'usure ou de l'esthétique des bandes, un homme du métier n'est donc pas amené à s'interroger sur ces questions.

Dans le dispositif de maintien de deux parties de bande(s) selon l'invention, lorsqu'aucun effort n'est exercé aux extrémités de ces deux parties de bande(s), celles-ci restent maintenues chacune dans un plan ; ces deux plans étant sensiblement parallèles entre eux. Au contraire, dans le dispositif du document US2835010, lorsque les bandes sont passées dans l'élément de maintien mais qu'aucune force de traction n'est effectuée aux extrémités des deux parties de bande(s), au moins une des parties de bande(s) tend à former un U dans le sens de sa longueur. C'est en effectuant un effort de traction aux extrémités des deux parties de bande(s) que ces extrémités peuvent définir des plans parallèles entre eux. Le dispositif de maintien de deux parties de bande(s) selon l'invention permet, quant à lui, par exemple de maintenir une bande autour du cou, de la taille, ou du poignet, afin de constituer une ceinture, une cravate ou un bracelet. Deux extrémités des parties de bande se rejoignent ainsi derrière le cou, la taille ou le poignet ; les deux autres extrémités de ces parties de bande étant libres, c'est-à-dire qu'elles ne subissent aucun effort de traction. Avec un dispositif selon le document US2835010 d'une part les parties de bande pourraient avoir tendance à se défaire et d'autre part les deux extrémités libres de ces parties de bande(s) tendraient à se positionner à la verticale des plans définis par les branches. Le dispositif selon le document US2835010 étant destiné à subir des efforts de traction au niveau des quatre extrémités, le problème du maintien des extrémités des parties de bande(s) selon des plans parallèles lorsqu'aucune force de traction n'est exercée aux extrémités de ces parties de bande(s) n'est donc nullement abordé par ce document et ne peut être déduit de ce document par un homme du métier.

Afin de maintenir au moins trois parties de bande(s), l'élément de maintien selon l'invention est constitué d'un unique corps rigide, composé d'au moins trois premières branches, dont les extrémités définissent un premier plan, d'au moins trois secondes branches, dont les extrémités définissent un second plan et d'au moins six parties de raccordement, sensiblement orthogonales aux plans définis par les extrémités des branches, reliant les extrémités des branches du premier plan aux extrémités des branches du second plan ; deux de ces parties de raccordement dont les extrémités du premier plan sont reliées par une même branche ne peuvent avoir les extrémités du second plan reliées par une même branche de ce second plan, et réciproquement, deux de ces parties de raccordement dont les extrémités du second plan sont reliées par une même branche ne peuvent avoir les extrémités du premier plan reliées par une même branche de ce premier plan ; l'ensemble des segments reliant deux extrémités d'une même branche constitue, par projection, un ou plusieurs quadrilatères.

Selon des modes particuliers de réalisation de l'élément :
L'ensemble des segments reliant deux extrémités d'une même branche peut constituer,
par projection, un ou plusieurs parallélogrammes.

Les branches et les parties de raccordement peuvent être des éléments sensiblement linéaires.

Il s'agit également d'un dispositif comportant des parties de bande(s) ainsi que l'élément de maintien, les parties de bandes étant maintenues par cet élément. Chaque partie de bande contribue au maintien du système et est maintenue lors de son passage dans le corps rigide par au minimum quatre parties de raccordement et au minimum deux branches.

Selon des modes particuliers de réalisation du dispositif :
Chacune des parties de bande(s) peut avoir une largeur sensiblement constante et une épaisseur sensiblement constante.
L'épaisseur des parties de bande(s) traversant l'élément selon un même axe peut être sensiblement égale et l'épaisseur cumulée des parties de bande(s) se croisant peut être sensiblement égale à la longueur des parties de raccordement du corps rigide.
La largeur de chacune des parties de bande(s) peut être sensiblement égale à la distance entre le plan défini par les extrémités des parties de raccordement d'un côté de la partie de bande considérée et le plan défini par les extrémités des parties de raccordement de l'autre côté de la partie de bande considérée.

Afin de maintenir deux parties de bande(s), le dispositif selon l'invention comprend ces deux parties de bande(s) ainsi qu'un élément de maintien, celui-ci étant constitué d'un unique corps rigide, composé de deux premières branches, dont les extrémités définissent un premier plan, de deux secondes branches, dont les extrémités définissent un second plan et de quatre parties de raccordement, sensiblement orthogonales aux plans définis par les extrémités des branches, reliant les extrémités des branches du premier plan aux extrémités des branches du second plan ; l'ensemble des segments qui relient les extrémités d'une même branche constitue, par projection, un quadrilatère ; chacune des parties de bande(s) présente une largeur sensiblement constante et une épaisseur sensiblement constante ; l'épaisseur cumulée des parties de bande(s) se croisant est sensiblement égale à la longueur des parties de raccordement du corps rigide. La largeur de chacune des parties de bande(s) est sensiblement égale à la distance entre le plan défini par les extrémités des parties de raccordement d'un côté de la partie de bande considérée et le plan défini par les extrémités des parties de raccordement de l'autre côté de la partie de bande considérée. Les parties de bande(s) sont sensiblement rigides.

Selon des modes particuliers de réalisation du dispositif :
L'ensemble des segments reliant deux extrémités d'une même branche du corps rigide peut constituer, par projection, un parallélogramme.
L'ensemble des segments reliant deux extrémités d'une même branche du corps rigide peut constituer, par projection, un parallélogramme dont les côtés opposés n'ont pas la même longueur.
Les branches et les parties de raccordement du corps rigide peuvent être des éléments sensiblement linéaires.

### Brève description des dessins

Les dessins annexés illustrent :
La figure 1 représente, en axonométrie, un premier exemple d'élément de maintien.
La figure 2 représente, en axonométrie, un dispositif de maintien correspondant au premier exemple d'élément de maintien.
La figure 3 représente, en axonométrie, d'une part l'ensemble des segments du premier exemple d'élément de maintien et d'autre part un premier plan.
La figure 4 représente, en axonométrie, d'une part l'ensemble des segments du premier exemple d'élément de maintien et d'autre part un second plan.
La figure 5 représente, en axonométrie, un deuxième exemple d'élément de maintien.
La figure 6 représente, en axonométrie, un dispositif de maintien correspondant au deuxième exemple d'élément de maintien.
La figure 7 représente, en axonométrie, d'une part l'ensemble des segments du deuxième exemple d'élément de maintien et d'autre part un premier plan.
La figure 8 représente, en axonométrie, d'une part l'ensemble des segments du deuxième exemple d'élément de maintien et d'autre part un second plan.
La figure 9 représente, en axonométrie, un troisième exemple d'élément de maintien.
La figure 10 représente, en axonométrie, un dispositif de maintien correspondant au troisième exemple d'élément de maintien.
La figure 11 représente, en axonométrie, d'une part l'ensemble des segments du troisième exemple d'élément de maintien et d'autre part un premier plan.
La figure 12 représente, en axonométrie, d'une part l'ensemble des segments du troisième exemple d'élément de maintien et d'autre part un second plan.
La figure 13 représente, en axonométrie, un quatrième exemple d'élément de maintien.
La figure 14 représente, en axonométrie, un dispositif de maintien correspondant au quatrième exemple d'élément de maintien.
La figure 15 représente, en axonométrie, d'une part l'ensemble des segments du quatrième exemple d'élément de maintien et d'autre part un premier plan.
La figure 16 représente, en axonométrie, d'une part l'ensemble des segments du quatrième exemple d'élément de maintien et d'autre part un second plan.
La figure 17 représente, en coupe, le dispositif de maintien correspondant au quatrième exemple d'élément de maintien.
La figure 18 représente, en coupe, le dispositif de maintien correspondant au document US2835010.
La figure 19 représente, en axonométrie, une partie de bande, des segments correspondant à des parties de raccordement, un troisième plan et un quatrième plan.
La figure 20 représente une branche, non linéaire, du corps rigide ainsi que le segment correspondant à cette branche.

### Description détaillée de quatre modes de réalisation

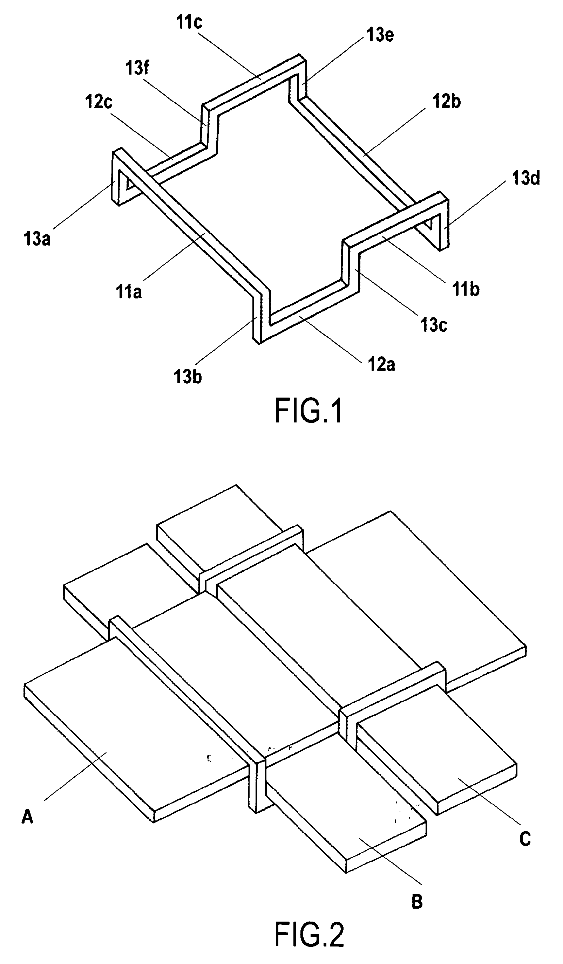

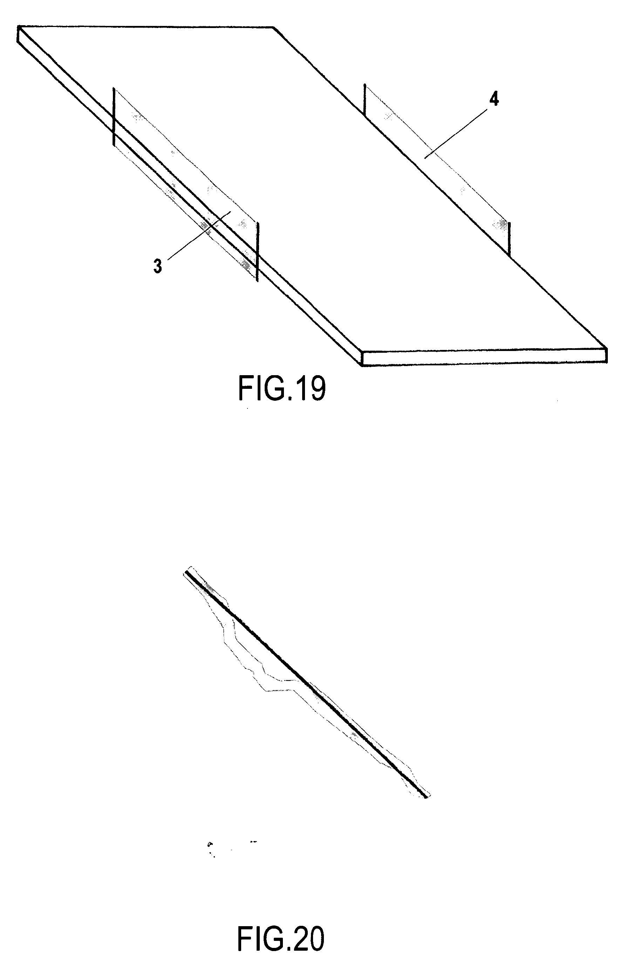

En référence aux figures 1 à 4, ainsi qu'aux figures 19 et 20, l'élément selon l'invention est constitué d'un unique corps rigide, composé de trois premières branches (11a, 11b et 11c), dont les extrémités définissent un premier plan (1), de trois secondes branches (12a, 12b et 12c), dont les extrémités définissent un second plan (2) et de six parties de raccordement (13a, 13b, 13c, 13d, 13e, 13f), sensiblement orthogonales aux plans (1 et 2) définis par les extrémités des branches (11a, 11b, 11c, 12a, 12b, 12c), reliant les extrémités des branches (11 a, 11 b, 11 c) du premier plan (1) aux extrémités des branches (12a, 12b, 12c) du second plan (2) ; deux de ces parties de raccordement (13a, 13b, 13c, 13d, 13e, 13f) dont les extrémités du premier plan (1) sont reliées par une même branche n'ont pas les extrémités du second plan (2) reliées par une même branche de ce second plan, et réciproquement, deux de ces parties de raccordement (13a, 13b, 13c, 13d, 13e, 13f) dont les extrémités du second plan (2) sont reliées par une même branche n'ont pas les extrémités du premier plan (1) reliées par une même branche de ce premier plan ; par exemple, les parties de raccordement 13a et 13b ont les extrémités du premier plan (1) reliées par une même branche (11a) de ce premier plan ; ces parties de raccordement (13a et 13b) n'ont donc pas les extrémités du second plan (2) reliées par une même branche de ce second plan. L'ensemble des segments correspondant aux branches (11 a, 11 b, 11 c, 12a, 12b, 12c) constitue, par projection selon l'axe Z, un parallélogramme.

Les branches (11a, 11 b, 11 c, 12a, 12b, 12c) et les parties de raccordement (13a, 13b, 13c, 13d, 13e, 13f) sont des éléments sensiblement linéaires.

Il s'agit également d'un dispositif comportant trois parties de bande(s) (A, B, C) ainsi que l'élément selon le mode de réalisation précédent, les parties de bandes (A, B, C) étant maintenues par cet élément. Chaque partie de bande contribue au maintien du système et est maintenue lors de son passage dans le corps rigide par deux branches et au minimum quatre parties de raccordement.

Chacune des parties de bande(s) (A, B, C) a une largeur sensiblement constante et une épaisseur sensiblement constante.

L'épaisseur des parties de bande(s) B et C est sensiblement égale et l'épaisseur cumulée des parties de bande(s) se croisant est sensiblement égale à la longueur des parties de raccordement du corps rigide. Par exemple, l'épaisseur cumulée des parties de bande(s) A et B est sensiblement égale à la longueur des parties de raccordement (13a, 13b, 13c, 13d, 13e et 13f).

La largeur de chacune des parties de bande(s) (A, B, C) est sensiblement égale à la distance entre le plan (3) défini par les extrémités des parties de raccordement d'un côté de la partie de bande considérée et le plan (4) défini par les extrémités des parties de raccordement de l'autre côté de la partie de bande considérée.

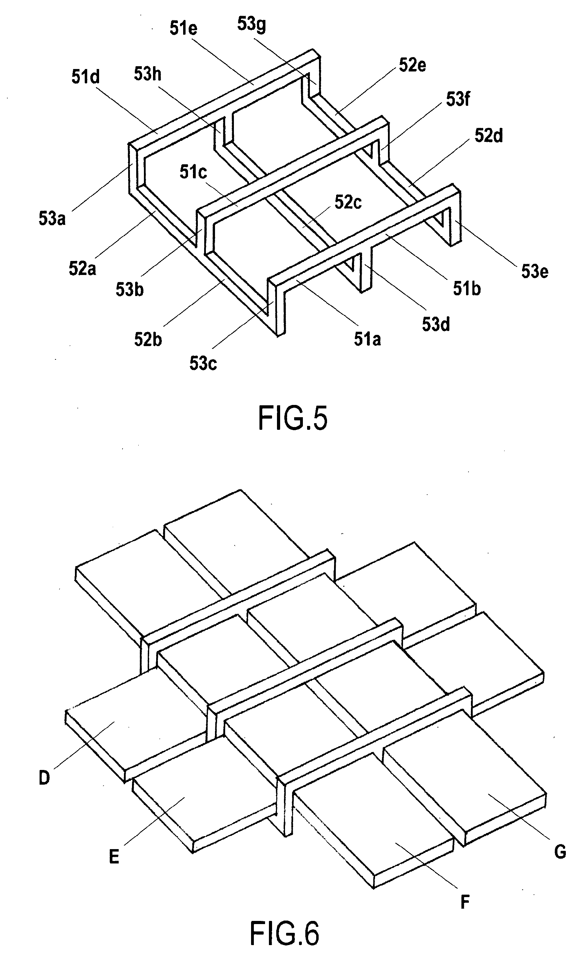

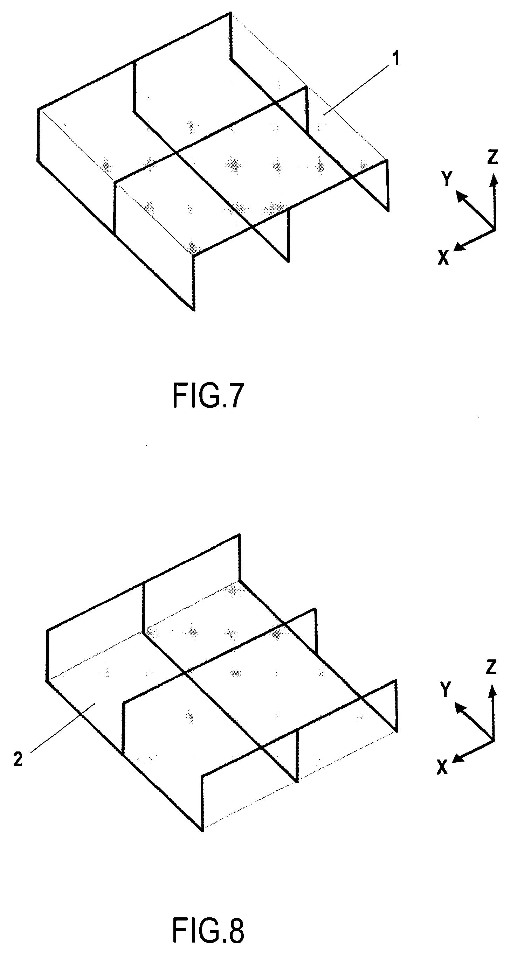

En référence aux figures 5 à 8, ainsi qu'aux figures 19 et 20, l'élément selon l'invention est constitué d'un unique corps rigide, composé de cinq premières branches (51 a, 51 b, 51 c, 51 d, 51e), dont les extrémités définissent un premier plan (1), de cinq secondes branches (52a, 52b, 52c, 52d, 52e), dont les extrémités définissent un second plan (2) et de huit parties de raccordement (53a, 53b, 53c, 53d, 53e, 53f, 53g, 53h), sensiblement orthogonales aux plans (1 et 2) définis par les extrémités des branches (51a, 51b, 51c, 51d, 51e, 52a, 52b, 52c, 52d, 52e), reliant les extrémités des branches (51 a, 51 b, 51 c, 51 d, 51e) du premier plan (1) aux extrémités des branches (52a, 52b, 52c, 52d, 52e) du second plan ; deux de ces parties de raccordement (53a, 53b, 53c, 53d, 53e, 53f, 53g, 53h) dont les extrémités du premier plan (1) sont reliées par une même branche n'ont pas les extrémités du second plan (2) reliées par une même branche de ce second plan, et réciproquement, deux de ces parties de raccordement (53a, 53b, 53c, 53d, 53e, 53f, 53g, 53h) dont les extrémités du second plan (2) sont reliées par une même branche n'ont pas les extrémités du premier plan (1) reliées par une même branche de ce premier plan ; par exemple, les parties de raccordement 53c et 53d ont les extrémités du premier plan (1) reliées par une même branche (51a) de ce premier plan ; ces parties de raccordement (53c et 53d) n'ont donc pas les extrémités du second plan (2) reliées par une même branche de ce second plan. L'ensemble des segments correspondant aux branches (51 a, 51 b, 51 c, 51 d, 51 e, 52a, 52b, 52c, 52d, 52e) constitue, par projection selon l'axe Z, quatre parallélogrammes.

Les branches (51a, 51b, 51c, 51d, 51e, 52a, 52b, 52c, 52d, 52e) et les parties de raccordement (53a, 53b, 53c, 53d, 53e, 53f, 53g, 53h) sont des éléments sensiblement linéaires.

Il s'agit également d'un dispositif comportant quatre parties de bande(s) (D, E, F, G) ainsi que l'élément selon le mode de réalisation précédent, les parties de bandes (D, E, F, G) étant maintenues par cet élément. Chaque partie de bande contribue au maintien du système et est maintenue lors de son passage dans le corps rigide par trois branches et cinq parties de raccordement.

Chacune des parties de bande(s) (D, E, F, G) a une largeur sensiblement constante et une épaisseur sensiblement constante.

L'épaisseur des parties de bande(s) D et E est sensiblement égale, l'épaisseur des parties de bande(s) F et G est sensiblement égale et l'épaisseur cumulée des parties de bande(s) se croisant est sensiblement égale à la longueur des parties de raccordement du corps rigide. Par exemple, l'épaisseur cumulée des parties de bande(s) D et F est sensiblement égale à la longueur des parties de raccordement (53a, 53b, 53c, 53d, 53e, 53f, 53g, 53h).

La largeur de chacune des parties de bande(s) (D, E, F, G) est sensiblement égale à la distance entre le plan (3) défini par les extrémités des parties de raccordement d'un côté de la partie de bande considérée et le plan (4) défini par les extrémités des parties de raccordement de l'autre côté de la partie de bande considéré.

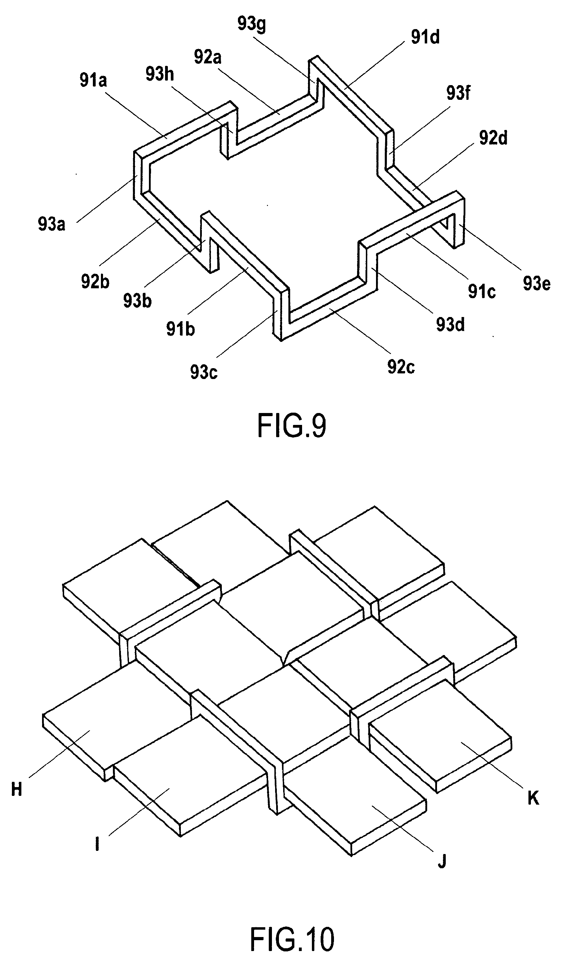

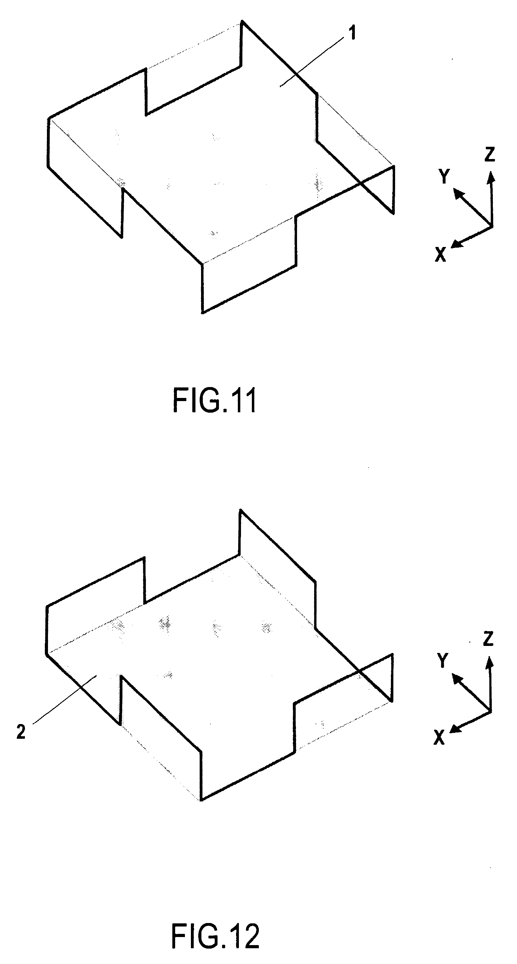

En référence aux figures 9 à 12, ainsi qu'aux figures 19 et 20, l'élément selon l'invention est constitué d'un unique corps rigide, composé de quatre premières branches (91 a, 91 b, 91c, 91 d), dont les extrémités définissent un premier plan (1), de quatre secondes branches (92a, 92b, 92c, 92d), dont les extrémités définissent un second plan (2) et de huit parties de raccordement (93a, 93b, 93c, 93d, 93e, 93f, 93g, 93h), sensiblement orthogonales aux plans (1 et 2) définis par les extrémités des branches (91 a, 91 b, 91 c, 91 d, 92a, 92b, 92c, 92d), reliant les extrémités des branches (91 a, 91 b, 91c, 91 d) du premier plan (1) aux extrémités des branches (92a, 92b, 92c, 92d) du second plan (2) ; deux de ces parties de raccordement (93a, 93b, 93c, 93d, 93e, 93f, 93g, 93h) dont les extrémités du premier plan (1) sont reliées par une même branche n'ont pas les extrémités du second plan (2) reliées par une même branche de ce second plan, et réciproquement, deux de ces parties de raccordement (93a, 93b, 93c, 93d, 93e, 93f, 93g, 93h) dont les extrémités du second plan (2) sont reliées par une même branche n'ont pas les extrémités du premier plan (1) reliées par une même branche de ce premier plan ; par exemple, les parties de raccordement 93d et 93e ont les extrémités du premier plan (1) reliées par une même branche (91c) de ce premier plan ; ces parties de raccordement (93d et 93e) n'ont donc pas leurs extrémités du second plan (2) reliées par une même branche de ce second plan. L'ensemble des segments correspondant aux branches (91 a, 91 b, 91 c, 91 d, 92a, 92b, 92c, 92d) constitue, par projection selon l'axe Z, un parallélogramme.

Les branches 91a, 91 b, 91 c, 91 d, 92a, 92b, 92c, 92d) et les parties de raccordement (93a, 93b, 93c, 93d, 93e, 93f, 93g, 93h) sont des éléments sensiblement linéaires.

Il s'agit également d'un dispositif comportant quatre parties de bande(s) (H, I, J, K) ainsi que l'élément selon le mode de réalisation précédent, les parties de bandes (H, I, J, K) étant maintenues par cet élément. Chaque partie de bande contribue au maintien du système et est maintenue lors de son passage dans le corps rigide par deux branches et cinq parties de raccordement. Chaque partie de bande croise deux parties de bande(s) selon l'autre axe, passant dessus l'une et dessous l'autre. Les parties de bande(s) ne restent donc pas dans un même plan lors de leur passage dans l'élément, mais la partie de cette partie de bande à son entrée dans cet élément de maintien est sensiblement parallèle à la partie de cette partie de bande à sa sortie de cet élément de maintien.

Chacune des parties de bande(s) (H, I, J, K) a une largeur sensiblement constante et une épaisseur sensiblement constante.

L'épaisseur des parties de bande(s) H et I est sensiblement égale, l'épaisseur des parties de bande(s) J et K est sensiblement égale et l'épaisseur cumulée des parties de bande(s) se croisant est sensiblement égale à la longueur des parties de raccordement du corps rigide. Par exemple, l'épaisseur cumulée des parties de bande(s) H et J est sensiblement égale à la longueur des parties de raccordement (93a, 93b, 93c, 93d, 93e, 93f, 93g, 93h).

La largeur de chacune des parties de bande(s) (H, I, J, K) est sensiblement égale à la distance entre le plan (3) défini par les extrémités des parties de raccordement d'un côté de la partie de bande considérée et le plan (4) défini par les extrémités des parties de raccordement de l'autre côté de la partie de bande considéré.

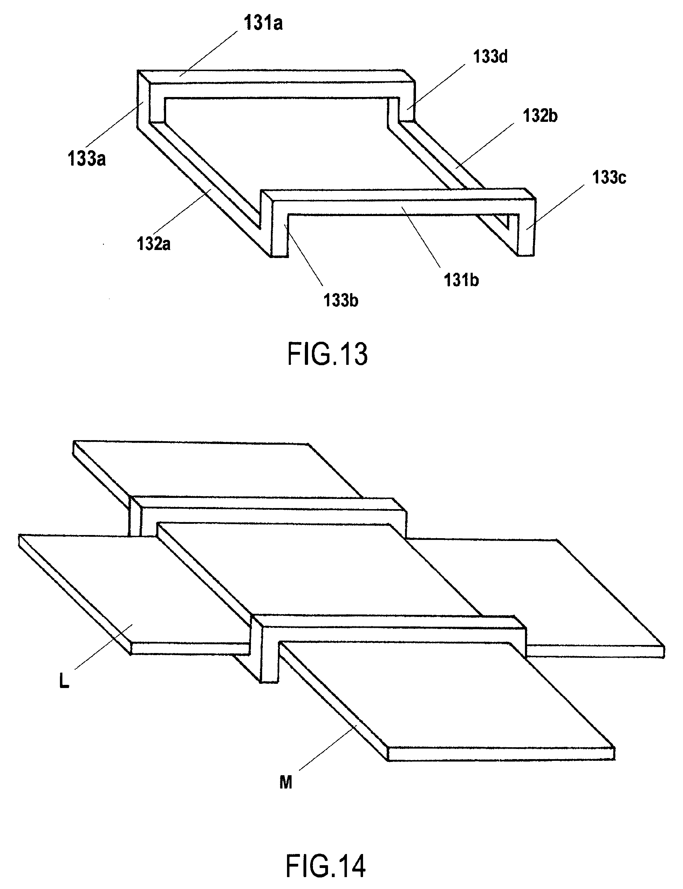

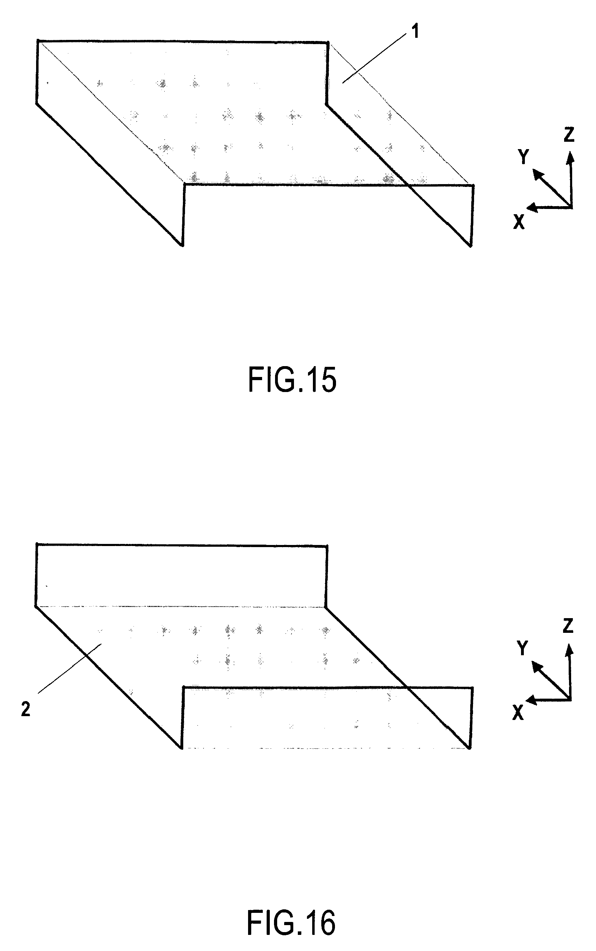

En référence aux figures 13 à 17, ainsi qu'aux figures 19 et 20, le dispositif selon l'invention comprend deux parties de bande(s) (L, M) sensiblement rigides ainsi que l'élément de maintien ; cet élément de maintien est constitué d'un unique corps rigide, composé de deux premières branches (131a, 131b), dont les extrémités définissent un premier plan (1), de deux secondes branches (132a, 132b), dont les extrémités définissent un second plan (2) et de quatre parties de raccordement (133a, 133b, 133c, 133d), sensiblement orthogonales aux plans (1 et 2) définis par les extrémités des branches (131a, 131b, 132a, 132b), reliant les extrémités des branches (131a, 131b) du premier plan (1) aux extrémités des branches (132a, 132b) du second plan (2) ; l'ensemble des segments reliant les extrémités d'une même branche constitue, par projection selon l'axe Z, un carré ; chacune des deux parties de bande(s) (L, M) présente une largeur sensiblement constante et une épaisseur sensiblement constante ; l'épaisseur cumulée des parties de bande(s) (L, M) se croisant est sensiblement égale à la longueur des parties de raccordement (133a, 133b, 133c, 133d) du corps rigide. La largeur de chacune des parties de bande(s) (L, M) est sensiblement égale à la distance entre le plan (3) défini par les extrémités des parties de raccordement d'un côté de la partie de bande considérée et le plan (4) défini par les extrémités des parties de raccordement de l'autre côté de la partie de bande considérée.

Les branches (131a, 131b, 132a, 132b) et les parties de raccordement (133a, 133b, 133c, 133d) du corps rigide sont des éléments sensiblement linéaires.

Manière dont l'invention est susceptible d'application industrielle

Le dispositif peut être est destiné au domaine vestimentaire, afin de maintenir entre-elles une ou plusieurs bandes.

Le dispositif peut être mis en application sous la forme d'une bande passée autour du cou, de la taille, du poignet, et maintenue grâce à l'élément ; les extrémités de la bande n'étant soumises à aucune force de traction.

Par corps rigide on désigne une pièce qui, sous les contraintes exercées par le dispositif et sur le dispositif lors de son usage et de la mise en place des parties de bande(s), subit une flexion sensiblement nulle, à l'oeil humain, et ne se scinde pas. Cette pièce peut être réalisée en divers matériaux comme le métal, le bois, le plastique. Selon les matériaux et l'esthétique recherchée, ce corps rigide peut être aussi bien moulé que découpé dans un même bloc de matériau ou encore constitué de pièces soudées ou collées. La distance entre les extrémités des branches est comprise entre 4mm et 200mm, et particulièrement entre 4mm et 80mm.

Par bande on désigne un élément linéaire et plat. Cette bande peut être réalisée en diverses matières comme le cuir, la laine, le jean, le plastique. Elle peut être composée d'une seule strate de la matière choisie mais également de plusieurs et ces strates peuvent être liées entre elles ou indépendantes.

Par bande sensiblement rigide on peut désigner soit une bande dont le diamètre de flexion toléré ne peut être inférieur à 5mm sans que cela nuise aux qualités de cette bande soit une bande constituée de plusieurs strates de bandes souples liées entre elles, cette superposition lui offrant une certaine rigidité, contribuant à la friction des parties de bande(s) se croisant, et lui conférant une certaine épaisseur, contribuant à la friction avec les parties de raccordement et avec les branches.

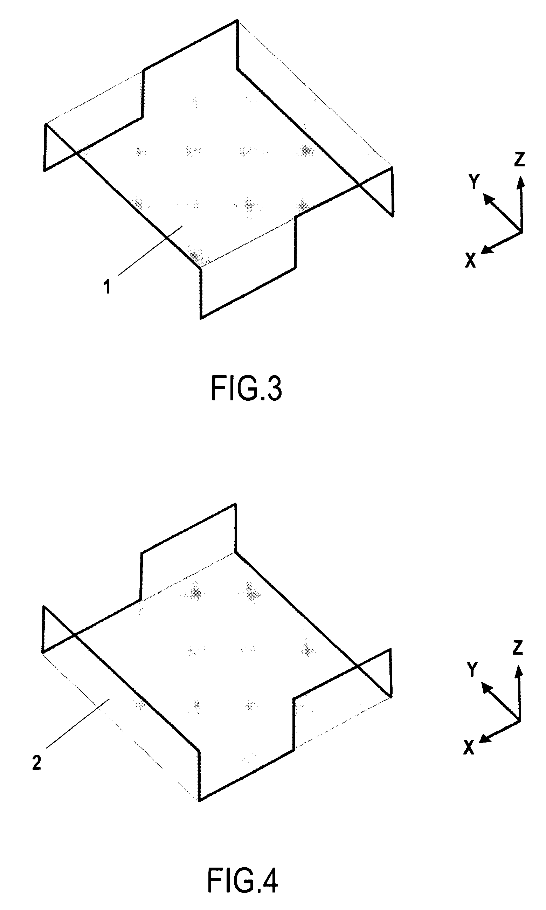

En référence aux figures 3, 4, 7, 8, 11, 12, 15, 16, 19 et 20, afin de définir des plans et formes géométrales, les branches et parties de raccordement du corps rigide sont remplacées par des segments, un segment correspondant à une portion de droite limitée par deux points.

En référence à la figure 20, les branches et parties de raccordement n'étant pas nécessairement linéaires, le segment correspondant à une branche est défini comme la liaison entre les extrémités de cette branche et le segment correspondant à une partie de raccordement est défini comme la liaison entre les extrémités de cette partie de raccordement.

En référence aux figures 3, 4, 7, 8, 11, 12, 15, 16 et 19, l'ensemble des segments correspondant aux branches ne constituant pas nécessairement, par projection selon l'axe Z, un ou plusieurs rectangles, mais des formes quadrilatérales ou parallélépipédiques, la largeur d'une partie de bande, pour être maintenue entre des parties de raccordement, est définie par distance entre le plan (3) défini par les extrémités des parties de raccordement d'un côté de la partie de bande considérée et le plan (4) défini par les extrémités des parties de raccordement de l'autre côté de la partie de bande considéré.

En référence aux figures 1 et 2, les parties constitutives du premier exemple de dispositif de maintien sont :
Premières branches : 11 a, 11 b, 11 c
Secondes branches : 12a, 12b, 12c
Parties de raccordement : 13a, 13b, 13c, 13d, 13e, 13f
Parties de bande(s) : A, B, C

En référence aux figures 5 et 6, les parties constitutives du deuxième exemple de dispositif de maintien sont :
Premières branches : 51 a, 51 b, 51 c, 51 d, 51 e
Secondes branches : 52a, 52b, 52c, 52d, 52e
Parties de raccordement : 53a, 53b, 53c, 53d, 53e, 53f, 53g, 53h
Parties de bande(s) : D, E, F, G

En référence aux figures 9 et 10, les parties constitutives du troisième exemple de dispositif de maintien sont :
Premières branches : 91 a, 91 b, 91 c, 91 d
Secondes branches : 92a, 92b, 92c, 92d
Parties de raccordement : 93a, 93b, 93c, 93d, 93e, 93f, 93g, 93h
Parties de bande(s) : H, I, J, K

En référence aux figures 13, 14 et 17, les parties constitutives du quatrième exemple de dispositif de maintien sont :
Premières branches : 131 a, 131b
Secondes branches : 132a, 132b
Parties de raccordement : 133a, 133b, 133c, 133d
Parties de bande(s) : L, M

## Revendications

1. Elément de maintien de parties de bande(s), retenues croisées en un endroit choisi sur celles-ci, selon deux axes définis et dont les plans définis par les parties de bande(s) à leur entrée sur l'élément de maintien et à leur sortie de l'élément de maintien sont sensiblement parallèles, **caractérisé en ce qu'**il est constitué d'un unique corps rigide, composé d'au moins trois premières branches (11 a, 11 b, 11 c, 51 a, 51 b, 51 c, 51 d, 51 e, 91 a, 91 b, 91 c, 91 d), dont les extrémités définissent un premier plan (1), d'au moins trois secondes branches (12a, 12b, 12c, 52a, 52b, 52c, 52d, 52e, 92a, 92b, 92c, 92d), dont les extrémités définissent un second plan (2) et d'au moins six parties de raccordement (13a, 13b, 13c, 13d, 13e, 13f, 53a, 53b, 53c, 53d, 53e, 53f, 53g, 53h, 93a, 93b, 93c, 93d, 93e, 93f, 93g, 93h), sensiblement orthogonales aux plans (1 et 2) définis par les extrémités des branches, reliant les extrémités des branches (11a, 11 b, 11 c, 51 a, 51 b, 51c, 51d, 51e, 91a, 91b, 91c, 91d) du premier plan (1) aux extrémités des branches (12a, 12b, 12c, 52a, 52b, 52c, 52d, 52e, 92a, 92b, 92c, 92d) du second plan (2) ; deux de ces parties de raccordement (13a, 13b, 13c, 13d, 13e, 13f, 53a, 53b, 53c, 53d, 53e, 53f, 53g, 53h, 93a, 93b, 93c, 93d, 93e, 93f, 93g, 93h) dont les extrémités du premier plan (1) sont reliées par une même branche ne peuvent avoir les extrémités du second plan (2) reliées par une même branche de ce second plan, et réciproquement, deux de ces parties de raccordement (13a, 13b, 13c, 13d, 13e, 13f, 53a, 53b, 53c, 53d, 53e, 53f, 53g, 53h, 93a, 93b, 93c, 93d, 93e, 93f, 93g, 93h) dont les extrémités du second plan (2) sont reliées par une même branche ne peuvent avoir les extrémités du premier plan (1) reliées par une même branche de ce premier plan ; l'ensemble des segments reliant deux extrémités d'une même branche constitue, par projection selon l'axe Z, un ou plusieurs quadrilatères.

2. Elément selon la revendication 1, **caractérisé en ce que** l'ensemble des segments reliant deux extrémités d'une même branche constitue, par projection selon l'axe Z, un ou plusieurs parallélogrammes.

3. Elément selon la revendication 1 ou la revendication 2, **caractérisé en ce que** les branches et les parties de raccordement sont des éléments sensiblement linéaires.

4. Dispositif comportant des parties de bande(s) ainsi qu'un élément selon l'une quelconque des revendications 1 à 3, **caractérisé en ce que** ces parties de bandes sont maintenues par l'élément ; chaque partie de bande contribuant au maintien du système et étant maintenue lors de son passage dans le corps rigide par au minimum quatre parties de raccordement et au minimum deux branches.

5. Dispositif selon la revendication 4, **caractérisé en ce que** chacune des parties de bande(s) a une largeur sensiblement constante et une épaisseur sensiblement constante.

6. Dispositif selon la revendication 4 ou la revendication 5, **caractérisé en ce que** l'épaisseur des parties de bande(s) traversant l'élément selon un même axe est sensiblement égale et l'épaisseur cumulée des parties de bande(s) se croisant est sensiblement égale à la longueur des parties de raccordement du corps rigide.

7. Dispositif selon la revendication 5 ou la revendication 6, **caractérisé en ce que** la largeur de chacune des parties de bande(s) est sensiblement égale à la distance entre le plan (3) défini par les extrémités des parties de raccordement d'un côté de la partie de bande considérée et le plan (4) défini par les extrémités des parties de raccordement de l'autre côté de la partie de bande considérée.

8. Dispositif selon l'une quelconque des revendications 4 à 7, **caractérisé en ce qu'**il est particulièrement destiné au domaine vestimentaire, afin de maintenir entre-elles une ou plusieurs bandes.

9. Dispositif selon la revendication 8, **caractérisé en ce qu'**il est mis en application sous la forme d'une ou plusieurs bande(s) passée(s) autour du cou, de la taille, du poignet, et maintenue(s) grâce à l'élément.
